Europäisches Patentamt

European Patent Office

Office européen des brevets

(19)

(11) Numéro de publication: **0 026 143**

**A1**

(12) **DEMANDE DE BREVET EUROPEEN**

(21) Numéro de dépôt: **80401341.5**

(22) Date de dépôt: **19.09.80**

(51) Int. Cl.³: **A 01 F 25/20**
**B 60 P 1/36**

(30) Priorité: **21.09.79 FR 7923560**

(43) Date de publication de la demande:
**01.04.81 · Bulletin 81/13**

(84) Etats Contractants Désignés:
**AT BE CH DE GB IT LI LU NL SE**

(71) Demandeur: **S.A. AUDUREAU Société dite:**
**La Copechagniere**
**F-85260 L'Herbergement (Vendée)(FR)**

(72) Inventeur: **Audureau, Bernard**
**Route de Nantes**
**F-85620 Rocheserviere(FR)**

(74) Mandataire: **Ducas, Michel et al,**
**Cabinet Boettcher 23, rue La Boétie**
**F-75008 Paris(FR)**

(54) **Dispositif pour le découpage, l'extraction, le transport et la distribution de blocs de fourrage.**

(57) L'invention concerne un dispositif pour le découpage, l'extraction, le transport et la distribution de blocs de fourrage. Un bâti 3 comporte un fond constitué par un transporteur à râclettes transversal 21 et une face avant constitué par un cadre 8, en avant duquel sont montés une fourche relevable 13 et un chemin de guidage 15, pour un chariot 17 portant un couteau 18, également relevable.

Fig.1

EP 0 026 143 A1

Dispositif pour le découpage, l'extraction, le transport et la distribution de blocs de fourrage.

L'invention concerne un dispositif portable par un tracteur ou un chariot automoteur pour le désilage par découpage, l'extraction, le transport de blocs de fourrage à extraire d'un silo. Elle concerne également un tel dispositif utilisable également à la distribution du fourrage ainsi transporté.

On connaît plusieurs dispositifs comportant une fourche horizontale qu'on enfonce dans le fourrage à extraire en bloc et comportant des moyens de découpage d'une saignée au droit du contour de la fourche. De telles unités de découpage sont elles-mêmes de différents types, par exemple à couteau vibrant guidé circulairement, comme dans les brevets français Nos 2 124 224 et 2 187 242, ou à couteau vibrant circulant sur un chemin de guidage comme dans le brevet français N° 2 218 046, ou encore à chaîne de sciage, comme dans les brevets français Nos 2 170 276 et 2 323 608. Ce dernier brevet cité comporte une fourche pivotante pouvant être verrouillée en position d'attaque du fourrage ensilé.

Le bloc de fourrage découpé par des unités de découpage portées par des tracteurs ou chariots munis du dispositif des types rappelés précédemment, est destiné à être transporté soit pour nourrir des bêtes au pré, soit, le plus couramment, pour nourrir des bêtes élevées en batterie. Le bloc découpé doit, dans ce cas, être amené dans une allée centrale, d'où il faut alors distribuer le fourrage, qui le compose, dans les mangeoires des animaux. Bien que ces mangeoires longent l'allée, il faut une intervention manuelle pour défaire le bloc et en répartir le fourrage. D'autre part, il faut, avec les appareils connus des types précités, faire autant de voyages entre silo et lieu d'élevage qu'on désire transporter de blocs de fourrage. Il est en effet avantageux de stocker quelques blocs de fourrages au lieu d'élevage pour réduire la fréquence des interventions du tracteur ou chariot équipé du dispositif de désilage.

Un des buts de l'invention est de permettre, par des moyens très simples, de désiler et transporter deux blocs de fourrage au cours d'un seul voyage du tracteur ou chariot entre silo et lieu d'élevage, c'est-à-dire de doubler la capacité de désilage et de transport à chaque voyage. Un autre but de l'invention est de permettre la distribution directe dans les mangeoires du fourrage en le répartissant régulièrement plus ou moins dilacéré.

Le premier but est atteint, selon l'invention, dans un dispositif portable du type rappelé au début et comportant, dans sa partie basse, une fourche, pivotante autour d'un axe horizontal transversal à la direction de déplacement du tracteur ou chariot, à dents immobilisables en position sensiblement horizontale et comportant, dans sa partie supérieure, une unité de découpage capable de pratiquer dans le fourrage ensilé une saignée sensiblement verticale selon un contour correspondant sensiblement au contour frontal et latéral de la fourche bloquée en position horizontale, par le fait qu'il comporte :

- immédiatement en arrière de l'axe de pivotement de la fourche, et sensiblement au niveau de cet axe, un support pour un bloc découpé, et

- un moyen commandable de relèvement et d'abaissement de la fourche par pivotement autour de son axe horizontal pour déversement d'un bloc découpé.

Le second but de l'invention est atteint par le fait que, pour la distribution du fourrage, le support pour le bloc découpé comprend un transporteur à sens de déplacement transversal à celui du chariot ou tracteur.

Il est avantageux que le transporteur comprenne des moyens d'arrachement et qu'il soit prévu des moyens d'immobilisation du bloc découpé contre le sens de l'arrachement.

Pratiquement, il sera commode que le transporteur soit un transporteur à raclettes et/ou palettes et avantageux que le dispositif comporte un organe démêleur et/ou déchiqueteur disposé au dessus du transporteur au voisinage de son extrémité de déchargement.

Il est, en outre, avantageux que l'unité de découpage soit au moins partiellement escamotable par pivotement vers le haut.

D'autres caractéristiques et avantages de l'invention ressortiront de la description, qui sera donnée ci-après uniquement à titre d'exemple, d'un mode de réalisation de l'invention. On se reportera à cet effet aux dessins annexés dans lesquels :

- la figure 1 est la vue en coupe verticale selon I de la figure 2 d'un dispositif selon l'invention.

- la figure 2 est une vue en plan de l'appareil de la figure 1.

- la figure 3 est une vue en coupe verticale selon III des figures 1 et 2 du même dispositif.

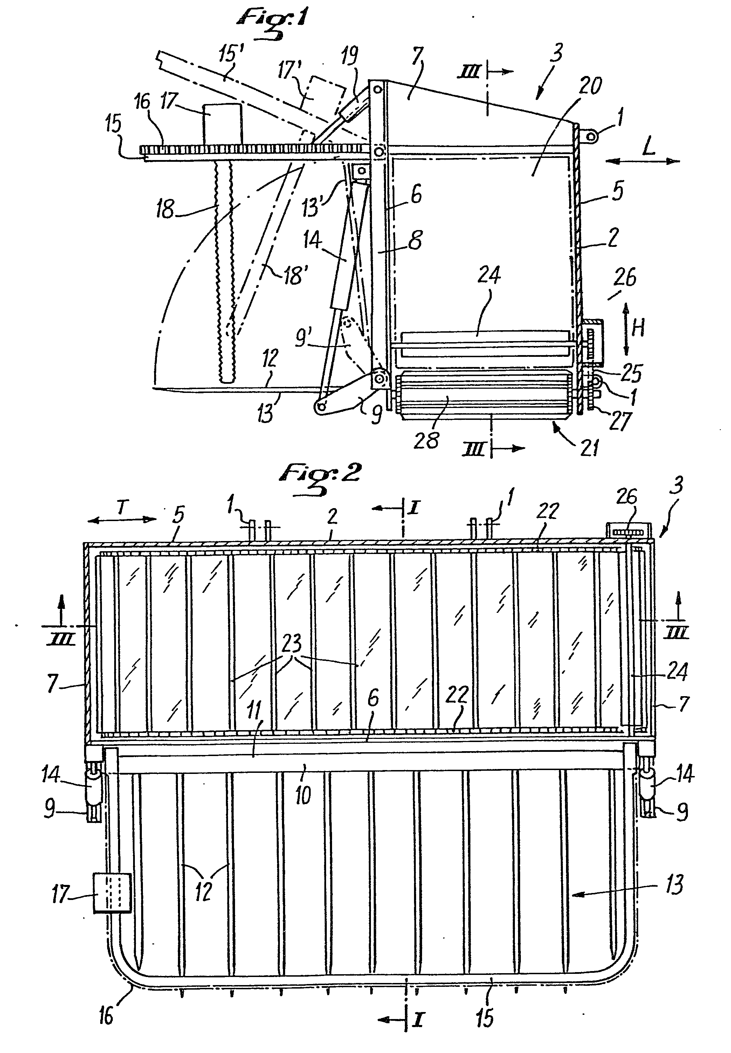

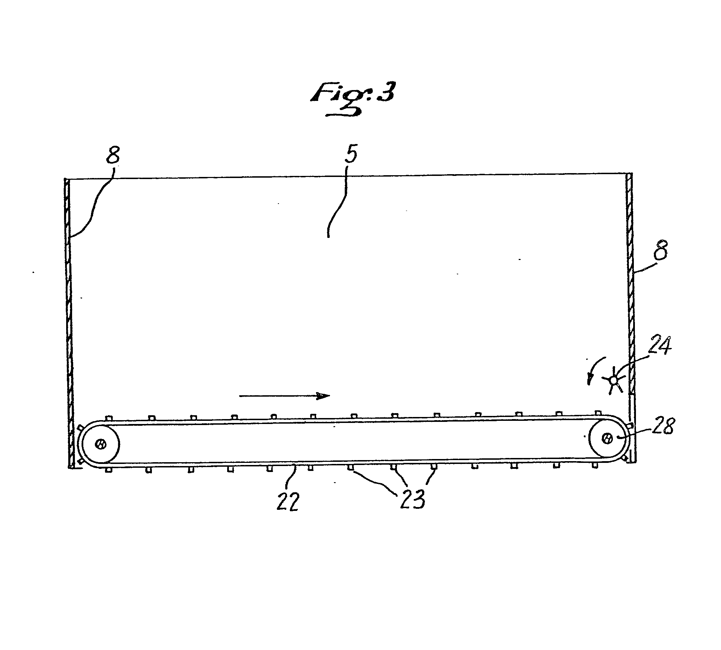

Le dispositif des figures 1 à 3 est construit pour être porté par un tracteur agricole ou pour être monté sur l'élévateur d'un chariot élévateur. A cet effet il comporte des pattes d'attache 1 sur la face 2, qui sera dite face arrière. Le dispositif est donc monté mobile verticalement selon la double flèche H. En outre, le tracteur ou chariot sur lequel il est monté peut le déplacer horizontalement selon la double flèche L.

Le dispositif comprend un bâti sensiblement parallélépipédique, comportant un fond 4, dont il sera parlé plus loin plus en détail, une paroi arrière 5, dont la face arrière 2 a déjà été mentionnée, un cadre vertical avant 6 dégageant une ouverture frontale rectangulaire complète et deux traverses latérales 7 reliant la partie supérieure du cadre à la partie supérieure de la paroi arrière 5 pour rigidifier le bâti 3.

Les deux montants latéraux 8 du cadre 6 portent chacun, à leurs pieds, un levier 9 dirigé vers la gauche de la figure 1 et pouvant basculer dans le plan de cette figure 1. Les deux leviers 9 sont solidaires d'une barre 10 longeant, en avant, la traverse horizontale basse 11 du cadre 6. La barre 10 porte des dents 12 de fourche dirigée vers l'avant, c'est-à-dire vers la gauche selon la figure 1. L'ensemble de la barre 10 et des dents 12 constitue donc une fourche 13 pouvant pivoter autour d'un axe horizontal par action sur les leviers 9. Il est prévu, à cet effet, deux vérins 14 reliant chacun l'extrémité libre de l'un des leviers 9 et le bâti 3 sur un point élevé 15 du montant latéral 8 correspondant. De cette façon la fourche peut prendre toutes positions possibles entre la position basse 13 horizontale représentée en trait plein et la position haute 13' quasi-verticale représentée en trait interrompu, les leviers 9 venant alors en 9' par commande des vérins 14.

Le bâti 3 porte encore, en avant au delà du cadre 6, une unité de découpage comportant un chemin de roulement 15 à crémaillère se développant horizontalement en U à partir de la partie supérieure de chacun des montants 8 du cadre 6. Sur le chemin de roulement en U, peut se déplacer, grâce à la crémaillère 16 un chariot 17 moteur ou mû comportant un pignon d'engrenage sur la crémaillère 16. Ce chariot 17 porte, comme il est connu en soi, un couteau vertical 18 à lame vibrante pour le découpage du fourrage selon le trajet défini par le chemin de roulement 15 et qui correspond, par construction, au profit horizontal du contour de la fourche 13 dans sa position horizontale. Le chemin de roulement 15 à crémaillère, avec le chariot 17, est monté pivotant autour d'un axe horizontal parallèle à l'axe de pivotement de la fourche 13, de façon à pouvoir passer de la position de découpage, représentée en trait continu, à une position d'escamotage 15' représentée en trait interrompu, le chariot et le couteau prenant alors les positions représentées en 17' et 18'. Deux vérins 19 attelés au chemin de roulement 15 et au sommet des montants verticaux 8 permettent de passer de la position de découpage à la position d'escamotage et inversement.

On voit, par ce qui a été décrit, jusqu'ici, qu'il est facile de découper, de façon connue en soi, un bloc 20 de fourrage ensilé, puis de l'extraire sur la fourche par recul du tracteur ou chariot. Mais, ce qui est nouveau, on peut ensuite déverser ce bloc 20 sur le fond du bâti 3 par simple relèvement de la fourche 13 commandé par les vérins 14 pendant que l'escamotage du chemin 15 libère la trajectoire du bloc 20 déversé. On peut ensuite remettre en position d'attaque et de découpage la fourche 13 et le chemin 15 avec le couteau 18 pour découper et extraire un deuxième bloc. Finalement le tracteur ou chariot porteur peut emmener deux blocs, l'un dans le bâti 3, l'autre sur la fourche 13 abaissée.

Selon un perfectionnement avantageux de l'invention, le fond du bâti 3 est constitué par un convoyeur 21 à chaînes 22 sans fin et à râclettes 23 à sens de déplacement transversal T par rapport au sens de déplacement L du tracteur ou chariot porteur. De cette façon la matière du bloc 20 est arrachée par les râclettes 23 et peut donc être déversée par le convoyeur 23 dans les mangeoires pendant que le tracteur ou chariot porteur se déplace parallèlement à celles-ci. Pour que le bloc entier ne soit pas entraîné, il suffit que les faces latérales du bâti comportent des barres ou parois d'arrêt. Le convoyeur peut être à un seul ou à deux sens de marche. Il est possible d'améliorer l'effet d'arrachement en disposant, au lieu d'une barre d'arrêt, un tourniquet 24 démêleur et/ou déchiqueteur disposé au dessus et près du point de déversement du convoyeur 21 transversalement au sens de déplacement de celui-ci. Ce tourniquet 24 peut être lié par chaîne 25 et pignons 26, 27 avec le tambour moteur 28 du convoyeur 21. On peut encore améliorer l'effet d'arrachement en prévoyant des râclettes 23 présentant des dents dirigées vers le bloc 20.

La mise en oeuvre de l'invention n'est pas liée au type de l'unité de découpage décrit. Elle peut se faire avec un autre type d'unité de découpage, comme ceux qui sont mentionnés au début.

**0026143**

## REVENDICATIONS

1) Dispositif portable par un tracteur ou un chariot automoteur pour le désilage par découpage, l'extraction, le transport de blocs de fourrage à extraire d'un silo comportant dans sa partie basse, une fourche (13) pivotante autour d'un axe horizontal transversal à la direction de déplacement du tracteur ou chariot, à dents immobilisables en position sensiblement horizontale et comportant, dans sa partie supérieure, une unité de découpage (15,16,17, 18) capable de pratiquer dans le fourrage ensilé une saignée sensiblement verticale selon un contour correspondant sensiblement au contour frontal et latéral de la fourche (13) bloquée en position horizontale, caractérisé en ce qu'il comporte :

- immédiatement en arrière de l'axe de pivotement de la fourche (13), et sensiblement au niveau de cet axe, un support (21) pour un bloc découpé, et
- un moyen commandable (14) de relèvement et d'abaissement de la fourche (13) par pivotement autour de son axe horizontal pour déversement d'un bloc découpé.

2) Dispositif selon la revendication 1, caractérisé en ce que, pour la distribution du fourrage, le support pour le bloc découpé est constitué par un transporteur (21) à sens de déplacement transversal à celui du chariot ou tracteur.

3) Dispositif selon la revendication 2, caractérisé en ce que le transporteur (21) comprend des moyens d'arrachement (23) et il est prévu des moyens d'immobilisation (24) du bloc découpé (20) contre le sens de l'arrachement.

4) Dispositif selon la revendication 3, caractérisé en ce que le transporteur (21) est un transporteur à râclettes et/ou palettes.

5) Dispositif selon la revendication 3, caractérisé en ce qu'il comporte un organe démêleur et/ou déchiqueteur (24) disposé au dessus du transporteur (21) au voisinage de son extrémité de déchargement.

6) Dispositif selon la revendication 1, caractérisé en ce que l'unité de découpage (15, 17, 18) est au moins partiellement escamotable par pivotement vers le haut.

7) Dispositif selon la revendication 4, caractérisé en ce que les râclettes et/ou palettes (23) présentent des dents.

Fig:1

Fig:2

## Fig:3

Office européen
des brevets

**RAPPORT DE RECHERCHE EUROPEENNE**

EP 80 40 1341

| Catégorie | Citation du document avec indication, en cas de besoin, des parties pertinentes | Revendication concernée |
|---|---|---|
| | **DOCUMENTS CONSIDERES COMME PERTINENTS** | |
| . | BE - A - 838 165 (ALBERT)<br>  * Page 4, ligne 8 - fin; page 5; page 6, figures 1,2 *<br><br>-- | 1-6 |
| | DE - A - 2 647 469 (DREYER)<br>  * Page 6, paragraphes 4,5,6; page 7; page 8; page 9; figures 1-4 *<br><br>-- | 2-5 |
| D | FR - A - 2 218 046 (VON DER HEIDE)<br>  * Page 3, lignes 19-36; page 4; figures 1,2,3 *<br><br>---- | 1 |

**CLASSEMENT DE LA DEMANDE (Int. Cl. ³)**

A 01 F 25/20
B 60 P 1/36

**DOMAINES TECHNIQUES RECHERCHES (Int. Cl. ³)**

A 01 F
B 60 P

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 18-12-1980 | VERMANDER |

OEB Form 1503.1  05.78